# EUROPEAN PATENT APPLICATION

(11) **EP 4 800 954 A1**
(43) Date of publication of application: **02.09.2026**
(21) Application number: 24887903.3
(22) Date of filing: 04.11.2024
(51) Int. Cl.: H04L 1/1812, H04L 1/1829, H04L 1/1867, H04W 72/232, H04L 5/00, H04W 72/23

(54) **COMMUNICATION METHOD AND APPARATUS**

(30) Priority: 08.11.2023 CN 202311490798
(71) Applicant: Huawei Technologies Co., Ltd., Shenzhen, Guangdong 518129 (CN)
(72) Inventor: WANG, Xiaolu, Shenzhen, Guangdong 518129 (CN); QIAO, Yunfei, Shenzhen, Guangdong 518129 (CN); YANG, Ruonan, Shenzhen, Guangdong 518129 (CN); KONG, Chuili, Shenzhen, Guangdong 518129 (CN)
(74) Representative: Thun, Clemens
(86) International application number: PCT/CN2024/129696
(87) International publication number: WO 2025/098291

(57) **Abstract**

Embodiments belong to the field of communication technologies, and provide a communication method and apparatus, to reduce retransmission latency and improve transmission spectral efficiency. According to the method, a terminal device may feed back, to a network device, a HARQ feedback message corresponding to received PDSCH data, for example, a first HARQ feedback message corresponding to first PDSCH data, and discard decoded soft information. In this case, the network device may obtain a HARQ feedback message of each piece of PDSCH data, to avoid spectral efficiency reduction cause by disabling HARQ feedback. In addition, all pieces of PDSCH data received by the terminal device are independent, in other words, the terminal device may separately decode each piece of PDSCH data, or the terminal device does not perform soft combination and decoding, and retransmission at a PHY/MAC layer may be implemented, so that retransmission latency can be reduced, and transmission spectral efficiency can be improved.

## Description

This application claims priority to Chinese Patent Application No. 202311490798.8, filed with the China National Intellectual Property Administration on November 8, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, in a scenario of high round trip time (round trip time, RRT), for example, a non-terrestrial network (non-terrestrial network, NTN) communication scenario, a feature of disabling hybrid automatic repeat request (hybrid automatic repeat request acknowledgment, HARQ) feedback is added. In a HARQ process in which the HARQ feedback is disabled, a terminal device may not need to send a HARQ feedback message to a network device, or the terminal device sends a negative acknowledgement (negative acknowledgement, NACK) message to the network device regardless of whether a decoding result is correct. When RTT is high, the HARQ feedback can only be disabled. In this case, the terminal device does not support retransmission at a physical layer (physical layer, PHY)/media access control (media access control, MAC) layer. To ensure correct transmission, a data packet that is incorrectly decoded may be retransmitted at a radio link control (radio link control, RLC) layer, to ensure reliable transmission of a system.

However, if the HARQ feedback at the PHY/MAC layer is disabled and retransmission at the RLC layer is performed, retransmission latency may be increased, and transmission spectral efficiency decreases.

### SUMMARY

Embodiments provide a communication method and apparatus, to reduce retransmission latency and improve transmission spectral efficiency.

To achieve the foregoing objective, embodiments use the following technical solutions.

According to a first aspect, a communication method is provided. The method may be performed by a terminal device, or may be performed by a chip or a circuit configured in the terminal device, or may be performed by a logical module or software that can implement all or a part of functions of the terminal device. The method includes: receiving first physical downlink shared channel PDSCH data, sending a first HARQ feedback message and discarding decoded soft information. The first HARQ feedback message is determined based on a decoding result of the first PDSCH data, the decoded soft information is determined based on the first PDSCH data, and the decoded soft information is for determining the decoding result.

It can be learned from the method according to the first aspect that, the terminal device may feed back, to a network device, a HARQ feedback message corresponding to received PDSCH data, for example, the first HARQ feedback message corresponding to the first PDSCH data, and discard the decoded soft information. In this case, the network device may obtain a HARQ feedback message of each piece of PDSCH data, to avoid spectral efficiency reduction cause by disabling HARQ feedback. In addition, all pieces of PDSCH data received by the terminal device are independent, in other words, the terminal device may separately decode each piece of PDSCH data, or the terminal device does not perform soft combination and decoding, and retransmission at a PHY/MAC layer may be implemented, so that retransmission latency can be reduced, and transmission spectral efficiency can be improved.

In a possible design solution, the method according to the first aspect may further include: receiving indication information. The sending the first HARQ feedback message and discarding the decoded soft information includes: sending the first HARQ feedback message and discarding the decoded soft information based on the indication information. In other words, the terminal device may determine whether to send the first HARQ feedback message to the network device and discard the decoded soft information based on the indication information sent by the network device, to indicate the terminal device to feed back the HARQ feedback message as required, and discard the decoded soft information, thereby implementing flexible scheduling and avoiding communication redundancy.

In a possible design solution, the indication information is carried in downlink control information DCI, that is, carried in an existing information element, to reduce implementation difficulty, or may be carried in a new information element, for example, newly defined DCI, to improve implementation flexibility. This is not limited.

Optionally, the indication information includes a decoding results feedback field. When a value of the decoding results feedback field is a first value, the first HARQ feedback message is sent, and the decoded soft information is discarded. In other words, when the value of the decoding results feedback field is the first value, regardless of whether the terminal device feeds back an ACK message or a NACK message, the terminal device may continue to receive new PDSCH data or retransmitted PDSCH data in a same HARQ process. To be specific, the terminal device may receive each piece of data received in the same HARQ process as a new piece of PDSCH data and separately decode the data, regardless of whether the PDSCH data is newly transmitted data or retransmitted data, or before feeding back a HARQ feedback message of a previously received piece of PDSCH data to the network device, the terminal device may continue to receive the PDSCH data (regardless of newly transmitted data or retransmitted data) in the same HARQ process. This is not limited.

It may be understood that, the decoding results feedback field may be carried in the DCI, and the indication information may indicate, by using the value of the decoding results feedback field, whether the terminal device sends the first HARQ feedback message and discards the decoded soft information. The decoding results feedback field may be a newly added field, or may directly reuse an existing field in the DCI. For example, optionally, at least one of the following is reused for the decoding results feedback field: a new data indicator NDI field, a redundancy version RV field, or a HARQ process number field, to reduce overheads, or the decoding results feedback field may reuse any other possible field. This is not limited.

In a possible design solution, the indication information is carried in a radio resource control RRC message, that is, carried in the existing information element, to reduce implementation difficulty, or may be carried in the new information element, to improve implementation flexibility. This is not limited.

Optionally, in a first HARQ process, the indication information indicates to send the first HARQ feedback message and discard the decoded soft information. It may be understood that, the first HARQ process may include one or more HARQ processes. It may be understood that, the network device may schedule, by using one piece of indication information, the terminal device to send the HARQ feedback message and discard the decoded soft information in the one or more HARQ processes, to reduce the overheads. Alternatively, one piece of indication information may correspond to one HARQ, and the network device may schedule, by using one piece of indication information, the terminal device to send the HARQ feedback message and discard the decoded soft information in the corresponding HARQ process. This implementation process is simple and flexible.

In a possible design solution, when the decoding result of the first PDSCH data is incorrect, the method according to the first aspect may further include: obtaining a channel estimation result, determining a quantity of retransmissions based on the decoding result and the channel estimation result, and sending the quantity of retransmissions. The quantity of retransmissions represents a quantity of attempts that the network device retransmits the first PDSCH data. In this way, the network device may perform retransmission more accurately based on the channel estimation result, to improve retransmission reliability.

According to a second aspect, a communication method is provided. The method may be performed by a network device, or may be performed by a chip or a circuit configured in the network device, or may be performed by a logical module or software that can implement all or a part of functions of the network device. The method includes: sending indication information, sending first PDSCH data, and receiving a first HARQ feedback message. The indication information indicates a terminal device to send a HARQ feedback message and discard decoded soft information; the HARQ feedback message is determined based on a decoding result of PDSCH data, the decoded soft information is determined based on the PDSCH data, and the decoded soft information is for determining the decoding result; and the PDSCH data includes the first PDSCH data.

It can be learned from the method according to the second aspect that, the network device may send the indication information to the terminal device, to indicate the terminal device to feed back, to the network device, the HARQ feedback message corresponding to the PDSCH data, and discard the decoded soft information. In this case, the network device may receive the first HARQ feedback message that is fed back by the terminal device and that is for the first PDSCH data, to avoid spectral efficiency reduction cause by disabling HARQ feedback. In addition, all pieces of PDSCH data received by the terminal device are independent, in other words, the terminal device may separately decode each piece of PDSCH data, and retransmission at a PHY/MAC layer may be implemented, so that retransmission latency can be reduced, and transmission spectral efficiency can be improved.

In a possible design solution, before the receiving the first HARQ feedback message, the method according to the second aspect may further include: sending second PDSCH data in a same HARQ process as that of the first PDSCH data, where the first PDSCH data and the second PDSCH data may be the same data or different data. This is not limited. In this way, the network device may continue to send next piece of PDSCH data in the same HARQ process without waiting for receiving the first HARQ feedback message, thereby improving time domain resource utilization and a system throughput.

In a possible design solution, the indication information may be carried in downlink control information DCI.

Optionally, the indication information includes a decoding results feedback field, and when a value of the decoding results feedback field is a first value, the indication information indicates the terminal device to send the HARQ feedback message and discard the decoded soft information.

Optionally, at least one of the following is reused for the decoding results feedback field: a new data indicator NDI field, a redundancy version RV field, or a HARQ process number field.

In a possible design solution, the indication information is carried in a radio resource control RRC message.

Optionally, in a first HARQ process, the indication information indicates to send the HARQ feedback message and discard the decoded soft information.

Optionally, before the receiving the first HARQ feedback message, the method according to the second aspect may include: sending third PDSCH data in the first HARQ process, where the first PDSCH data and the third PDSCH data may be the same data or different data. This is not limited. In this way, in the first HARQ process, the network device may continue to send next piece of PDSCH data without waiting for receiving the first HARQ feedback message, thereby improving the time domain resource utilization and the system throughput.

In a possible design solution, the method according to the second aspect may further include: receiving a quantity of retransmissions, and retransmitting the first PDSCH data based on the quantity of retransmissions.

For other technical effects of the communication method according to the second aspect, refer to the technical effects of the communication method according to the first aspect. Details are not described herein.

For other technical effects of the communication method according to the second aspect, refer to the technical effects of the communication method according to the first aspect. Details are not described herein.

According to a third aspect, a communication apparatus is provided. The apparatus includes modules configured to perform the method according to the first aspect, for example, a transceiver module and a processing module.

The transceiver module is configured to receive first physical downlink shared channel PDSCH data, and the processing module is configured to send a first HARQ feedback message and discard decoded soft information. The first HARQ feedback message is determined based on a decoding result of the first PDSCH data, the decoded soft information is determined based on the first PDSCH data, and the decoded soft information is for determining the decoding result.

In a possible design scheme, the transceiver module is further configured to receive indication information. The processing module is further configured to send the first HARQ feedback message and discard the decoded soft information based on the indication information.

In a possible design solution, the indication information may be carried in downlink control information DCI.

Optionally, the indication information includes a decoding results feedback field, and when a value of the decoding results feedback field is a first value, the first HARQ feedback message is sent and the decoded soft information is discarded.

In a possible design solution, the indication information is carried in a radio resource control RRC message.

Optionally, in a first HARQ process, the indication information indicates to send the first HARQ feedback message and discard the decoded soft information.

In a possible design solution, when the decoding result of the first PDSCH data is incorrect, the processing module is further configured to obtain a channel estimation result; the processing module is further configured to determine a quantity of retransmissions based on the decoding result and the channel estimation result; and the transceiver module is configured to send the quantity of retransmissions. The quantity of retransmissions represents a quantity of attempts that a network device retransmits the first PDSCH data.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus is caused to perform the communication method according to the first aspect.

It should be noted that, the communication apparatus according to the third aspect may be a terminal device, may be a chip (system) or another part or component that may be disposed in the terminal device, or may be an apparatus including the terminal device. This is not limited in embodiments.

In addition, for technical effects of the communication apparatus according to the third aspect, refer to the technical effects of the communication method according to the first aspect. Details are not described herein again.

According to a fourth aspect, a communication apparatus is provided. The apparatus includes a module configured to perform the method according to the second aspect, for example, a transceiver module and a processing module.

The transceiver module is configured to send indication information; the transceiver module is further configured to send first PDSCH data; and the transceiver module is further configured to receive a first HARQ feedback message. The indication information indicates a terminal device to send a HARQ feedback message and discard decoded soft information; the HARQ feedback message is determined based on a decoding result of PDSCH data, the decoded soft information is determined based on the PDSCH data, and the decoded soft information is for determining the decoding result; and the PDSCH data includes the first PDSCH data.

In a possible design solution, before the first HARQ feedback message is received, the transceiver module may further be configured to send second PDSCH data in a same HARQ process as that of the first PDSCH data.

In a possible design solution, the indication information may be carried in downlink control information DCI.

Optionally, the indication information includes a decoding results feedback field, and when a value of the decoding results feedback field is a first value, the indication information indicates the terminal device to send the HARQ feedback message and discard the decoded soft information.

Optionally, at least one of the following is reused for the decoding results feedback field: a new data indicator NDI field, a redundancy version RV field, or a HARQ process number field.

In a possible design solution, the indication information is carried in a radio resource control RRC message.

Optionally, in a first HARQ process, the indication information indicates to send the HARQ feedback message and discard the decoded soft information.

Optionally, before the first HARQ feedback message is received, the transceiver module may further be configured to send third PDSCH data in the first HARQ process.

In a possible design solution, the transceiver module is further configured to receive a quantity of retransmissions; and the processing module is configured to retransmit the first PDSCH data based on the quantity of retransmissions.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is caused to perform the communication method according to the second aspect.

It should be noted that, the communication apparatus according to the fourth aspect may be a terminal device, may be a chip (system) or another part or component that may be disposed in the terminal device, or may be an apparatus including the terminal device. This is not limited in embodiments.

In addition, for technical effects of the communication apparatus according to the fourth aspect, refer to the technical effects of the communication method according to the second aspect. Details are not described herein again.

According to a fifth aspect, a communication apparatus is provided. The communication apparatus includes a processor. The processor is configured to perform the communication method according to the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory and the processor may be integrated together, or may be disposed separately. The memory may be configured to store a computer program and/or data related to the communication method according to the first aspect or the second aspect.

In embodiments, the communication apparatus according to the fifth aspect may be a terminal device, a chip (system) or another part or component that may be disposed in the terminal device, or an apparatus including the terminal device.

In addition, for technical effects of the communication apparatus according to the fifth aspect, refer to the technical effects of the communication method according to the first aspect or the second aspect. Details are not described herein again.

According to a sixth aspect, a communication apparatus is provided. The communication apparatus includes a processor. The processor is coupled to a memory, and the processor is configured to execute a computer program stored in the memory, to cause the communication apparatus to perform the communication method according to the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In embodiments, the communication apparatus according to the sixth aspect may be a terminal device, a chip (system) or another part or component that may be disposed in the terminal device, or an apparatus including the terminal device.

In addition, for technical effects of the communication apparatus according to the sixth aspect, refer to the technical effects of the communication method according to the first aspect or the second aspect. Details are not described herein again.

According to a seventh aspect, a communication apparatus is provided, and includes a processor and a memory. The memory is configured to store a computer program. When the processor executes the computer program, the communication apparatus is caused to perform the communication method according to the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments, the communication apparatus according to the seventh aspect may be a terminal device, a chip (system) or another part or component that may be disposed in the terminal device, or an apparatus including the terminal device.

In addition, for technical effects of the communication apparatus according to the seventh aspect, refer to the technical effects of the communication method according to the first aspect or the second aspect. Details are not described herein again.

According to an eighth aspect, a communication apparatus is provided, and includes a processor. The processor is configured to be coupled to a memory, and perform, after reading a computer program in the memory, the communication method according to the first aspect or the second aspect based on the computer program.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In embodiments, the communication apparatus according to the eighth aspect may be a terminal device, a chip (system) or another part or component that may be disposed in the terminal device, or an apparatus including the terminal device.

In addition, for technical effects of the communication apparatus according to the eighth aspect, refer to the technical effects of the communication method according to the first aspect or the second aspect. Details are not described herein again.

According to a ninth aspect, a communication system is provided. The communication system includes the terminal device according to the first aspect and/or the network device according to the second aspect.

According to a tenth aspect, a computer-readable storage medium is provided, and includes a computer program or instructions. When the computer program or the instructions are run on a computer, the computer is caused to perform the communication method according to the first aspect or the second aspect.

According to an eleventh aspect, a computer program product is provided, and includes a computer program or instructions. When the computer program or the instructions are run on a computer, the computer is caused to perform the communication method according to the first aspect or the second aspect.

### BRIEF DESCRIPTION OF DRAWINGS

FIG. 1 is a diagram of a stop-and-wait protocol;
FIG. 2 is a diagram of parallel transmission of a plurality of HARQ processes;
FIG. 3 is a diagram of a retransmission mechanism in an NR system;
FIG. 4 is a diagram of RLC retransmission;
FIG. 5 is a first diagram of an architecture of a communication system according to an embodiment of this application;
FIG. 6 is a second diagram of an architecture of a communication system according to an embodiment of this application;
FIG. 7 is a third diagram of an architecture of a communication system according to an embodiment of this application;
FIG. 8 is a schematic flowchart of a communication method according to an embodiment of this application;
FIG. 9 is a diagram of retransmission based on disabled HARQ transmission;
FIG. 10 is a diagram of comparison of transmission spectral efficiency of different target block error rates;
FIG. 11 is a first diagram of a structure of a communication apparatus according to an embodiment of this application; and
FIG. 12 is a second diagram of a structure of a communication apparatus according to an embodiment of this application.

### DESCRIPTION OF EMBODIMENTS

For ease of understanding, the following first describes technical terms in embodiments.

### 1. Non-terrestrial network (non-terrestrial network, NTN) communication

Currently, a new radio (New Radio, NR) technology is evolving from an R18 version to an R19 version. In addition, the NR technology also enters a commercial deployment phase from a standardization phase. An NR standard protocol is researched for wireless communication technologies designed for terrestrial cellular network scenarios, and can provide users with wireless communication services featuring ultra-low latency, ultra-high reliability, ultra-high rates, and ultra-massive connectivity. However, seamless global coverage cannot be achieved via a cellular network. For example, in areas without terrestrial base stations, such as sea areas, polar areas, and rainforests, voice and data services cannot be provided for these areas without cellular network coverage.

Compared with terrestrial communication, the NTN communication has features such as large coverage and flexible networking, and can provide seamless global network coverage. An NTN network is a supplement to a current terrestrial network, and may also be considered as an independent communication system that provides users with global high-speed network access. Currently, research institutes, communication organizations, communication companies, and the like in the world all have participated in researching NTN communication technologies and standard formulation, aiming to build an integrated communication network for space-air-ground communication.

The NTN communication includes networking by using devices such as an uncrewed aerial vehicle, a high altitude platform, and a satellite, to provide services such as data transmission and voice communication for user equipment (User Equipment, UE). A height between a high-altitude platform device and the ground is generally 8 km to 50 km. According to an orbital altitude of a satellite, a satellite communication system may be classified into three types: a geostationary earth orbit (geostationary earth orbit, GEO) satellite communication system, which is also referred to as a synchronous orbit satellite system; a medium earth orbit (medium earth orbit, MEO) satellite communication system; and a low earth orbit (low earth orbit, LEO) satellite communication system.

An orbital height of a GEO satellite is 35786 km. A main advantage is that the GEO satellite can remain stationary relative to the ground and provide a large coverage area. However, the GEO satellite has significant disadvantages in communication: (1) A GEO satellite orbit is far away from the earth, and a free space propagation loss is large, which results in a tight communication link budget. To increase a transmit/receive gain, the satellite needs to be equipped with an antenna with a large diameter. (2) Communication transmission latency is high, and round trip time may reach about 500 ms, which cannot meet requirements of low-latency services. (3) GEO orbital resources are limited, launch costs are high, and coverage cannot be provided for polar regions of the earth. An orbital height of a MEO satellite ranges from 2000 km to 35786 km. An advantage is that global coverage can be implemented by using a smaller quantity of satellites. However, the MEO satellite has a larger orbital height than that of the LEO satellite, and transmission latency is still higher than that of LEO satellite communication. Based on the advantage and the disadvantage of MEO satellite communication, the MEO satellite is mainly used for positioning and navigation.

An orbital height of a LEO satellite ranges from 300 km to 2000 km. The LEO satellite has a lower orbital height than that of the MEO satellite and the GEO satellite, and has advantages of low data transmission latency, a small transmission loss, and low transmission costs. Therefore, LEO satellite communication has gained more attention in recent years.

It may be understood that, a significant difference from terrestrial communication lies in that a distance between a base station and terminal UE is long, and round-trip transmission latency is high.

### 2. Soft information

In a communication system, a decoder at a receive end may calculate a log-likelihood ratio (log-likelihood ratio, LLR) (which may be considered as soft information or a "soft" output of the decoder) of a bit value during decoding/demodulation. In embodiments, soft information may refer to a decoder output that has not yet been finalized (for example, a bit value that has not yet been determined as 1 or 0), but can still provide useful information (for example, in subsequent decoding iteration). It may be understood that, the soft information may be probabilistic in nature, for example, an LLR.

The receive end may store, in a buffer (buffer), for example, a HARQ buffer, soft information of a received erroneous data packet or a data packet that is incorrectly decoded, and combine the soft information with soft information of a subsequently received retransmitted data packet, to obtain a data packet that is more reliable than a data packet that is separately decoded (a soft combination process), and then the receive end may decode combined data.

A soft combination solution may include a chase combining solution, an incremental redundancy solution, and the like. This is not limited. In the chase combining solution, retransmitted bit information is the same as initially transmitted bit information. In the incremental redundancy solution, the transmit end may send an information bit and some redundant bits during initial transmission, and send additional redundant bits through retransmission. If decoding is not successfully performed during the initial transmission, the transmit end may retransmit more redundant bits to reduce a code rate of a channel, and the receive end combines retransmitted data with previously transmitted data, to improve a decoding success rate. It may be understood that, a coded bit set in each retransmission is referred to as a redundancy version (redundancy version, RV).

### 3. Downlink control information (downlink control information, DCI)

A network device may send the DCI to a terminal device, to schedule a physical downlink shared channel (physical downlink shared channel, PDSCH). In section 7.3.1 in the technical specification (technical specification, TS) 38.212 of the 3rd generation partnership project (3rd generation partnership project, 3GPP) protocol, three types of DCI formats (format) are defined, including a format 0_x, a format 1_x, and a format 2_x, as shown in Table 1.

The format 0_x indicates physical uplink shared channel (physical uplink shared channel, PUSCH) scheduling, and the format 0_x may include a format 0_0 and a format 0_1. A radio network temporary identifier (radio network temporary identifier, RNTI) used in the format 0_0 may include a cell-RNTI (cell-RNTI, C-RNTI) and a temporary cell-RNTI (temporary C-RNTI, TC-RNTI), where the C-RNTI is for PUSCH scheduling, and the TC-RNTI is for message (message, MSG) 3 scheduling in a random access procedure. An RNTI used in the format 0_1 may include a C-RNTI that is for PUSCH scheduling.

The format 1_x may indicate PDSCH scheduling, and the format 1_x may include a format 1_0 and a format 1_1. An RNTI used in the format 1_0 may include a C-RNTI, a paging RNTI (paging RNTI, P-RNTI), a system information RNTI (system information RNTI, SI-RNTI), a random access RNTI (random access RNTI, RA-RNTI), and a TC-RNTI, where the C-RNTI is for PUSCH scheduling, the P-RNTI is for paging message scheduling, the SI-RNTI is for system information scheduling, the RA-RNTI is for MSG2 scheduling in a random access procedure, and the TC-RNTI is for MSG3 scheduling in a random access procedure. An RNTI that may be used in the format 1_1 may include a C-RNTI that is for PUSCH scheduling.

The format 2_x may be used in another scenario, and the format 1_x may include a format 2_0, a format 2_1, a format 2_2, and a format 2_3. An RNTI used in the format 2_0 may include a slot format indication RNTI (slot format indication RNTI, SFI-RNTI), where the SFI-RNTI is for slot format information. An RNTI used in the format 2_1 may include an interruption RNTI (interruption RNTI, INT-RNTI), where the INT-RNTI is for pre-emption (pre-emption) resource occupation information. An RNTI used in the format 2_2 may include a transmit power control (transmit power control, TPC)-PUSCH-RNTI (TPC-PUSCH-RNTI) and a TPC-physical uplink control channel (physical uplink control channel, PUCCH)-RNTI (TPC-PUCCH-RNTI), where the TPC-PUSCH-RNTI is for a PUSCH power control command, and the TPC-PUCCH-RNTI is for a PUCCH power control command. An RNTI used in the format 2_3 may include a TPC-sounding reference signal (sounding reference signal, SRS)-RNTI (TPC-SRS-RNTI), where the TPC-SRS-RNTI is for an SRS power control command.

**Table 1**

| Category | DCI format | Used RNTI and application scenario |
|---|---|---|
| Indicating | Format 0_0 | C-RNTI: for PUSCH scheduling |
| PUSCH scheduling | | TC-RNTI: for MSG3 scheduling in a random access procedure |
| | Format 0_1 | C-RNTI: for PUSCH scheduling |
| Indicating PDSCH scheduling | Format 1_0 | C-RNTI: for PUSCH scheduling |
| | | P-RNTI: for paging message scheduling |
| | | SI-RNTI: for system information scheduling |
| | | RA-RNTI: for MSG2 scheduling in a random access procedure |
| | | TC-RNTI: for MSG3 scheduling in a random access procedure |
| | Format 1_1 | C-RNTI: for PUSCH scheduling |
| Used in other scenarios | Format 2_0 | SFI-RNTI: for slot format information |
| | Format 2_1 | INT-RNTI: for pre-emption resource occupation information |
| | Format 2_2 | TPC-PUSCH-RNTI: for a PUSCH power control command |
| | | TPC-PUCCH-RNTI: for a PUCCH power control command |
| | Format 2_3 | TPC-SRS-RNTI: for an SRS power control command |

It may be understood that, the DCI may further have another format, for example, a format 3_x for sidelink (sidelink) scheduling, and a format 4_x for broadcast scheduling. Details are not described.

As shown in Table 2, existing DCI may include: a new data indicator (new data indicator, NDI) field, a redundancy version (redundancy version, RV) field, a HARQ process number (HARQ process number) field, an identifier for DCI formats (identifier for DCI formats) field, a modulation and coding scheme (modulation and coding scheme) field, a PDSCH-to-feedback timing indicator (PDSCH-to-feedback timing indicator) field, a downlink assignment index (downlink assignment index) field, a carrier indicator (carrier indicator) field, a bandwidth part (bandwidth part, BWP) indicator (indicator) field, a frequency domain resource assignment (frequency domain resource assignment) field, a time domain resource assignment (time domain resource assignment) field, a virtual resource block (virtual resource block) to physical resource block (virtual resource block) mapping (VRB-to-PRB mapping) field, a PRB bundling size indicator (PRB bundling size indicator) field, and the like. This is not limited.

**Table 2**

| DCI field | Function |
|---|---|
| Decoding results feedback | Indicates whether to feed back a decoding result |
| Identifier for DCI formats | Indicates whether a DCI format is a DL or a UL |
| Modulation and coding scheme | Indicates a modulation and coding scheme |
| PDSCH-to-feedback timing indicator | Indicates information about PDSCH channel feedback timing |
| Downlink assignment index | Indicates a quantity of feedback bits |
| Carrier indicator | Indicates a carrier when a higher-layer parameter is for configuring multi-carrier scheduling |
| BWP indicator | Indicates an activated BWP |
| Frequency domain resource assignment | Indicates frequency domain resource assignment |
| Time domain resource assignment | Indicates time domain resource assignment |
| VRB-to-PRB mapping | Indicates whether a VRB mapping mode is interleaved |
| PRB bundling size indicator | Indicates a PRB bundle size |
| ... | ... |

The NDI field may indicate whether transmitted data is new data. The RV field may indicate a sent redundancy version number. The HARQ process number field may indicate a process number, and may identify retransmission and soft combination. The identifier for DCI formats field may indicate whether a DCI format is a downlink (downlink, DL) or an uplink (uplink, UL), and occupies 1 bit (where a fixed value for the downlink is 1). The modulation and coding scheme field may indicate a modulation and coding scheme, and occupies 5 bits. The PDSCH-to-feedback timing indicator field may indicate information about PDSCH channel feedback timing, and may occupy 0, 1, 2, or 3 bits, which is not limited. The downlink assignment index field may indicate a quantity of feedback bits. The carrier indicator field may indicate a carrier when a higher-layer parameter is for configuring multi-carrier scheduling, and may occupy 0 or 3 bits, which is not limited. The BWP indicator field may indicate an activated BWP, and may occupy 0, 1, or 2 bits. The frequency domain resource assignment field may indicate frequency domain resource assignment. The time domain resource assignment field may indicate time domain resource assignment, and may occupy 0, 1, 2, 3, 4, 5, or 6 bits, which is not limited. The VRB-to-PRB mapping field may indicate whether a VRB mapping mode is interleaved, and may occupy 0 or 1 bit, which is not limited. The PR bundling size indicator field may indicate a PRB bundling size, and may occupy 0 or 1 bit, which is not limited.

### 4. HARQ process

A HARQ is a method for improving data transmission reliability. In the HARQ, whether an error occurs in a received data packet is determined through a cyclic redundancy check (cyclic redundancy check, CRC) check. It may be understood that, the CRC check is performed after soft combination. If the CRC check succeeds, a receive end sends an acknowledgement (acknowledgement or positive acknowledgement, ACK) message. If the CRC check fails, the receive end sends a NACK message.

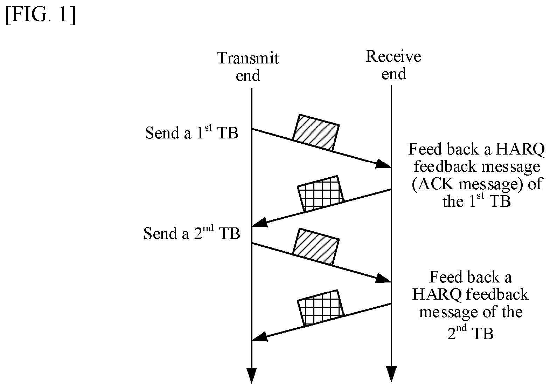

In a same HARQ process, a stop-and-wait protocol (stop-and-wait protocol) may be used to send data. In the stop-and-wait protocol, as shown in FIG. 1, in a same HARQ process, after sending a 1st transport block (transport block, TB), a transmit end stops sending and waits for a feedback message from the receive end; the receive end uses 1-bit information to feed back an ACK or a NACK for the TB; and after receiving the ACK message, the transmit end sends a 2nd TB. In other words, the stop-and-wait protocol has the following features: (1) Regardless of whether the receive end performs decoding correctly, the receive end needs to send a HARQ feedback message to the transmit end. (2) The transmit end continues to send a next piece of data in a same process only after receiving an ACK message fed back by the receive end. In other words, before receiving an ACK message from the receive end, the transmit end does not send a next piece of data (newly transmitted data) in the same process.

However, after each transmission, the transmit end needs to stop to wait for an acknowledgement, which causes a low throughput. Therefore, in the HARQ, a plurality of parallel stop-and-wait processes (stop-and-wait processes) may be used for parallel processing, and the stop-and-wait process may be also referred to as a HARQ process (HARQ process). When waiting for acknowledgement information in one HARQ process, the transmit end may continue to send data in another HARQ process. Similarly, when processing data received in one HARQ process, the receive end may continue to receive data in another HARQ process.

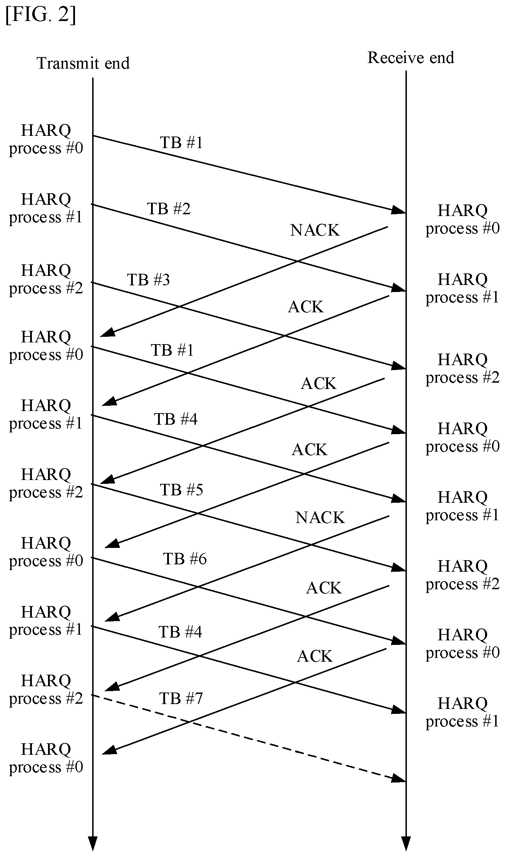

As shown in FIG. 2, the transmit end may send a TB #1 in a HARQ process #0, and the receive end may receive the TB #1 in the HARQ process #0, and feed back a NACK message corresponding to the TB #1. In this case, after receiving the NACK message corresponding to the TB #1 in the HARQ process #0, the transmit end resends the TB #1 in the HARQ process #1. The receive end may continue to receive the TB #1 in the HARQ process #0, and feed back an ACK message corresponding to the TB #1. After receiving the ACK message corresponding to the TB #1 in the HARQ process #0, the transmit end may continue to send a TB #6 in the HARQ process #0. The receive end may receive the TB #6 in the HARQ process #0, and feed back an ACK message corresponding to the TB #6. After receiving the ACK message corresponding to the TB #6 in the HARQ process #0, the transmit end may continue to send a new TB in the HARQ process #0, and so on. Details are not described.

Similarly, the transmit end may send a TB #2 in a HARQ process #1, and the receive end may receive the TB #2 in the HARQ process #1, and feed back an ACK message corresponding to the TB #2. In this case, after receiving the ACK message corresponding to the TB #2 in the HARQ process #1, the transmit end may continue to send a TB #4 in the HARQ process #1, and so on. Details are not described again. The transmit end may send a TB #3 in a HARQ process #2, and the receive end may receive the TB #3 in the HARQ process #2, and feed back an ACK message corresponding to the TB #3. In this case, after receiving the ACK message corresponding to the TB #3 in the HARQ process #2, the transmit end may continue to send a TB #5 in the HARQ process #1, and so on. Details are not described.

It may be understood that, a plurality of HARQ processes are used for parallel processing, to form one HARQ entity, each uplink or downlink carrier may correspond to one HARQ entity, and one HARQ entity may support a maximum of 32 HARQ processes.

### 5. Retransmission

Bit errors occur when a receiver end does not receive correct information, and a problem of the bit errors may be resolved through error correction. That the receive end does not receive correct information may be understood as follows: The receive end receives no information, and/or the receive end decodes received information incorrectly. After finding a bit error, the receive end requests the transmit end to retransmit incorrect data. This manner is referred to as backward error correction. In a communication system, for example, a new radio (new radio, NR) system, a retransmission mechanism under protocols at three layers, that is, a PHY/MAC layer, an RLC layer, and a packet data convergence protocol (packet data convergence protocol, PDCP) layer, is used for retransmission.

For PHY/MAC retransmission, a MAC layer HARQ mechanism is the most commonly used retransmission mechanism, in which the receive end immediately feeds back an information transmission success or failure result to the transmit end for fast retransmission.

For RLC retransmission, an RLC layer automatic repeat request (automatic repeat request, ARQ) mechanism is a supplement to the MAC layer retransmission mechanism. In comparison with the HARQ mechanism, a feedback status report in the RLC layer retransmission is transmitted at lower frequency, and feedback overheads are smaller. However, retransmission latency is much higher than that of the PHY/MAC layer retransmission. Therefore, the MAC layer HARQ mechanism and the RLC layer ARQ mechanism are combined to meet data transmission requirements in different application scenarios.

PDCP retransmission is mainly used for a scenario in which UE is handed over between cells across gNodeBs. A PDCP layer retransmission function can ensure no data loss in handover because related configurations and buffers of lower-layer protocols (for example, protocols at the RLC layer and the MAC layer) are cleared in a handover process but related configurations and buffers of the PDCP layer are not cleared.

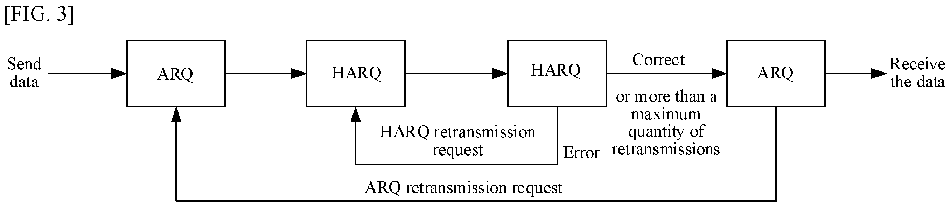

As shown in FIG. 3, after sending data, a transmit end configures related parameters for ARQ retransmission and HARQ retransmission. A receive end first performs detection on the data through PHY/MAC HARQ retransmission. If the receive end detects a decoding error/fault, the receive end may send a HARQ retransmission request to the transmit end, to implement PHY/MAC layer retransmission through HARQ retransmission. If the receive end detects that decoding is performed correctly, or a quantity of HARQ retransmissions exceeds a maximum quantity of retransmissions, the receive end may send an ARQ retransmission request to the transmit end, to implement RLC retransmission through ARQ retransmission. This can meet data transmission requirements in different application scenarios.

### 6. Disable HARQ feedback

To adapt to a scenario of high round trip time, for example, a satellite communication scenario, a maximum quantity of HARQ processes is increased from 16 to 32 in the R17 version of the NR. However, a time domain resource corresponding to the high round trip time still cannot be fully occupied by using 32 processes, affecting a system throughput. Therefore, a feature of disabling the HARQ feedback (disabling HARQ feedback) is added. In a HARQ process in which the HARQ feedback is disabled, a terminal device may not need to send a HARQ feedback message to a network device, or the terminal device sends a NACK message to the network device regardless of whether a decoding result is correct.

It may be understood that, in a current NR-NTN system, an ACK/a NACK is fed back based on TBs, and a maximum quantity of HARQ processes supported by a NR-NTN is 32. When RTT is high, HARQ feedback at a PHY/MAC layer can only be disabled. In the NR-NTN, the network device may use a radio resource control (radio resource control, RRC) message to indicate whether to disable the HARQ feedback for each HARQ process, to fully use a time domain resource. It may be understood that, a scenario in which the NR-NTN does not support a HARQ at a PHY/MAC layer varies with different sub-carrier spacings (sub-carrier spacings, SCS). For example, when an SCS is 15 kHz, an orbit (orbit) height of a satellite is greater than 1200 km, and RTT is greater than 32 ms; when an SCS is 30 kHz, an orbit height of a satellite is greater than 510 km, and RTT is greater than 16 ms; when the SCS is 30 kHz, the orbit height of the satellite is greater than 510 km, and the RTT is greater than 16 ms; when an SCS is 60 kHz, an orbit height of a satellite is greater than 230 km, and RTT is greater than 8 ms; and when an SCS is 120 kHz, an orbit height of a satellite is greater than 110 km, and RTT is greater than 4 ms. In the scenarios corresponding to different SCSs, a time domain resource of round trip time cannot be fully used by using 32 HARQ processes. Therefore, feedback in a part or all of HARQ processes needs to be disabled.

However, if the HARQ feedback at the PHY/MAC layer is disabled, retransmission at the PHY/MAC layer is not supported. To ensure correct transmission, after the HARQ feedback at the PHY/MAC layer is disabled, retransmission at the PHY/MAC layer is not supported. To ensure correct transmission, data packets that are incorrectly decoded are retransmitted at the RLC layer, to ensure reliable transmission of a system. When retransmission at the PHY/MAC layer is not supported, a PHY target block error rate (target BLER) may be set to 0.01, to ensure that an error rate of data received at the RLC layer, such as a protocol data unit (protocol data unit, PDU), is not larger than 1%.

For example, it is assumed that a physical layer target block error rate (target BLER) is set to 0.01 after the HARQ feedback is disabled, and the physical layer target block error rate is set to 0.1 when the HARQ feedback is not disabled. In this case, transmission spectral efficiency when the HARQ feedback is disabled is lower than transmission spectral efficiency when the HARQ feedback is not disabled. It may be understood that, the transmission spectral efficiency may be defined as a length of a time resource of t seconds and a bandwidth of w hertz (Hz) that are occupied by successfully transmitting data of a size of p bits, that is, the transmission spectral efficiency may be p/(t*w) bit/s/Hz.

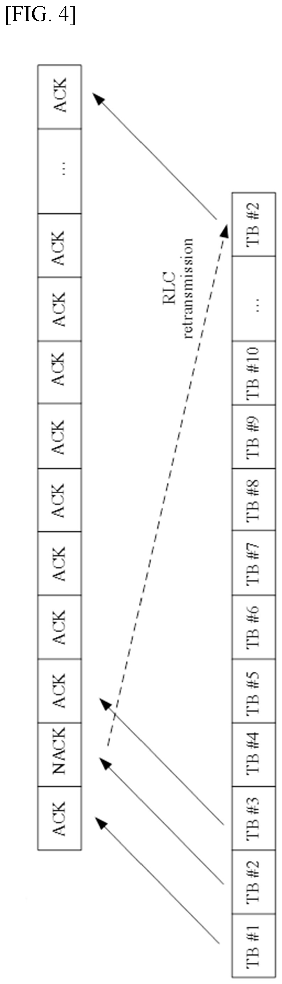

In addition, when the HARQ feedback at the PHY/MAC layer is disabled and the retransmission at the RLC layer is performed, retransmission latency increases. As shown in FIG. 4, it is assumed that a transmit end is a network device and a receive end is a terminal device. The network device sends a TB #1 to the terminal device, and the terminal device feeds back a corresponding ACK message after receiving the TB #1. The network device sends a TB #2 to the terminal device, and the terminal device feeds back a corresponding NACK message after receiving the TB #2. However, the network device needs to wait for a long time period before resending the TB #2 to the terminal device. For example, the network device only can retransmit the TB #2 after sending a plurality of TBs, for example, a TB #3, ..., a TB #10, .... Retransmission latency is high.

In conclusion, if the HARQ feedback at the PHY/MAC layer is disabled and the retransmission at the RLC layer is performed, retransmission latency increases, and transmission spectral efficiency decreases.

In conclusion, for the foregoing technical problem, embodiments provide the following technical solution, to reduce retransmission latency and improve transmission spectral efficiency.

The following describes technical solutions in embodiments with reference to the accompanying drawings.

The technical solutions in embodiments may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, 4G such as a long term evolution (long term evolution, LTE) system, a worldwide interoperability for microwave access (worldwide interoperability for microwave access, WiMAX) communication system, 5G such as a new radio (new radio, NR) system, and a future communication system.

All aspects, embodiments, or features are presented in embodiments by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments, the term like "example" or "for example" is for representing giving an example, an illustration, or descriptions. Any embodiment or design solution described as an "example" in embodiments should not be explained as being more preferred or having more advantages than another embodiment or design solution. Exactly, use of the word "example" is intended to present a concept in a specific manner.

In embodiments, terms "information (information)", "signal (signal)", "message (message)", "channel (channel)", and "signaling (signaling)" may sometimes be interchangeably used. It should be noted that, meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in embodiments may indicate an "or" relationship. It may be understood that, in embodiments, an "indication" may include a direct indication, an indirect indication, an explicit indication, or an implicit indication. When a specific piece of indication information is described as indicating A, it may be understood as that, the indication information carries A, directly indicates A, or indirectly indicates A.

In embodiments, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments. The sending periodicities and/or the sending occasions of the pieces of sub-information may be predefined, for example, predefined according to the protocol, or may be configured by a transmit-end device by sending configuration information to a receive end device.

A network architecture and a service scenario described in embodiments are intended to describe the technical solutions in embodiments more clearly, and do not constitute a limitation on the technical solutions provided in embodiments. A person of ordinary skill in the art may learn that with evolution of a network architecture and emergence of a new service scenario, the technical solutions provided in embodiments are also applicable to resolving similar technical problems.

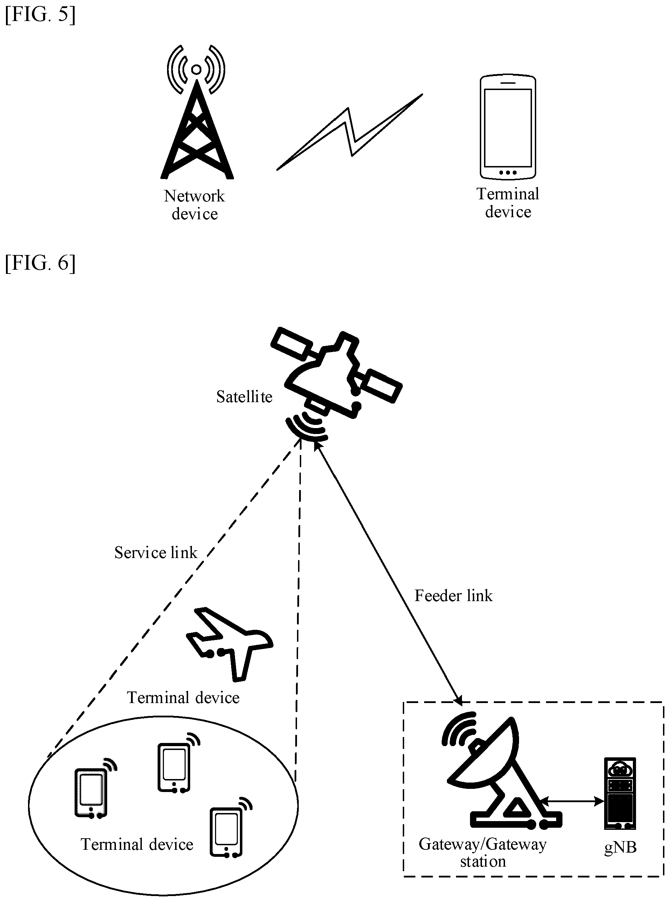

For ease of understanding embodiments, a communication system shown in FIG. 5 is first used as an example to describe in detail a communication system applicable to embodiments. For example, FIG. 5 is a first diagram of an architecture of a communication system to which a communication method according to an embodiment of this application is applicable.

As shown in FIG. 5, the communication system mainly includes a network device and a terminal device.

There may be a plurality of network devices, for example, a first network device, a second network device, and a third network device. The network device may be a device having a wireless transceiver function, or may be a chip or a chip system disposed in the device; and is located in an access network (access network, AN) of the communication system, to provide an access service for the terminal. For example, the network device may be referred to as a radio access network (radio access network, RAN) device, and may be specifically a next generation mobile communication system. For example, in a next generation mobile communication system, the network device may be named in another manner, which falls in the protection scope of embodiments. This is not limited in embodiments. Alternatively, the network device may include a gNB in 5G, for example, a new radio (new radio, NR) system, may include one or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF). For example, the network device may be a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, or a 5G core network element. Alternatively, the network device may further include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, and the like.

The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the network device may be a CU node, a DU node, or a device including a CU node and a DU node. In addition, the CU may be classified as a network device in the access network RAN, or the CU may be classified as a network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in embodiments may be implemented by using a software module, a hardware module, or a combination of a software module and a hardware module.

A form of the network device is not limited in embodiments. An apparatus configured to implement a function of the network device may be the network device, or may be an apparatus that can support the network device in implementing the function, for example, a chip system. The apparatus may be installed in the network device or used in cooperation with the network device.

There may be one or more terminal devices, for example, a first terminal device, a second terminal device, and a third terminal device. The terminal device may be a terminal device having a transceiver function, or may be a chip or a chip system disposed in the terminal device. The terminal device may also be referred to as user equipment (user equipment, UE), an access terminal device, a subscriber unit (subscriber unit), a subscriber station, a mobile station (mobile station, MS), a remote station, a remote terminal device, a mobile device, a user terminal device, a terminal device, a wireless communication device, a user agent, or a user apparatus. The terminal device in embodiments may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal device, a computer having a wireless transceiver function, a virtual reality (virtual reality, VR) terminal device, an augmented reality (augmented reality, AR) terminal device, a smart home device (for example, a refrigerator, a television, an air conditioner, or a meter), a smart robot, a robot arm, a workshop device, a wireless terminal device in self driving, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), a vehicle-mounted terminal device, a road side unit (road side unit, RSU) or the like having a terminal device function, a flight device (for example, a smart robot, a hot air balloon, an uncrewed aerial vehicle, or an airplane), or the like. The terminal device in embodiments may alternatively be a vehicle-mounted module, a vehicle-mounted component, a vehicle-mounted chip, or a vehicle-mounted unit that is built in a vehicle as one or more components or units. Alternatively, the terminal device may be another device having a terminal device function. For example, the terminal device may alternatively be a device that functions as a terminal device in D2D communication.

A form of the terminal device is not limited in embodiments. An apparatus configured to implement a function of the terminal device may be the terminal device, or may be an apparatus that can support the terminal device in implementing the function, for example, a chip system. The apparatus may be installed in the terminal device or used in cooperation with the terminal device. In embodiments, the chip system may include a chip, or may include a chip and another discrete device.

In the communication system, the terminal device may feed back, to the network device, a HARQ feedback message corresponding to received PDSCH data, for example, a first HARQ feedback message corresponding to first PDSCH data, and discard decoded soft information. In this case, the network device may obtain a HARQ feedback message of each piece of PDSCH data, to avoid spectral efficiency reduction cause by disabling HARQ feedback. In addition, all pieces of PDSCH data received by the terminal device are independent, in other words, the terminal device may separately decode each piece of PDSCH data, or the terminal device does not perform soft combination and decoding, and retransmission at a PHY/MAC layer may be implemented, so that retransmission latency can be reduced, and transmission spectral efficiency can be improved.

For example, FIG. 6 is a second diagram of an architecture of a communication system to which a communication method according to an embodiment of this application is applicable. As shown in FIG. 6, the communication system is a satellite communication system. The communication system mainly includes a terminal device, a gateway (gateway, which may also be referred to as a ground station or a gateway station), and a satellite (which may also be referred to as a satellite base station).

A link between the satellite and the terminal device may be referred to as a service link, a link between the satellite and the gateway may be referred to as a feeder link, and a link between satellites may be referred to as an inter-satellite link. An operating mode of the satellite may be classified into a transparent (transparent) transmission mode and regenerative (regenerative) mode. When the satellite operates in the transparent transmission mode, the satellite only has a function of signal forwarding, and the GW has functions of a gNB or a part of functions of a gNB. In this case, the GW may be considered as a base station. When the satellite operates in the regenerative mode, the satellite has a capability of processing a digital signal, and the satellite has functions of the gNB or a part of functions of the gNB. In this case, the satellite may be considered as a base station. In addition, the gNB (base station) is connected to a core network. A plurality of satellites jointly provide a service through coordination for the terminal device in an overlapping coverage area.

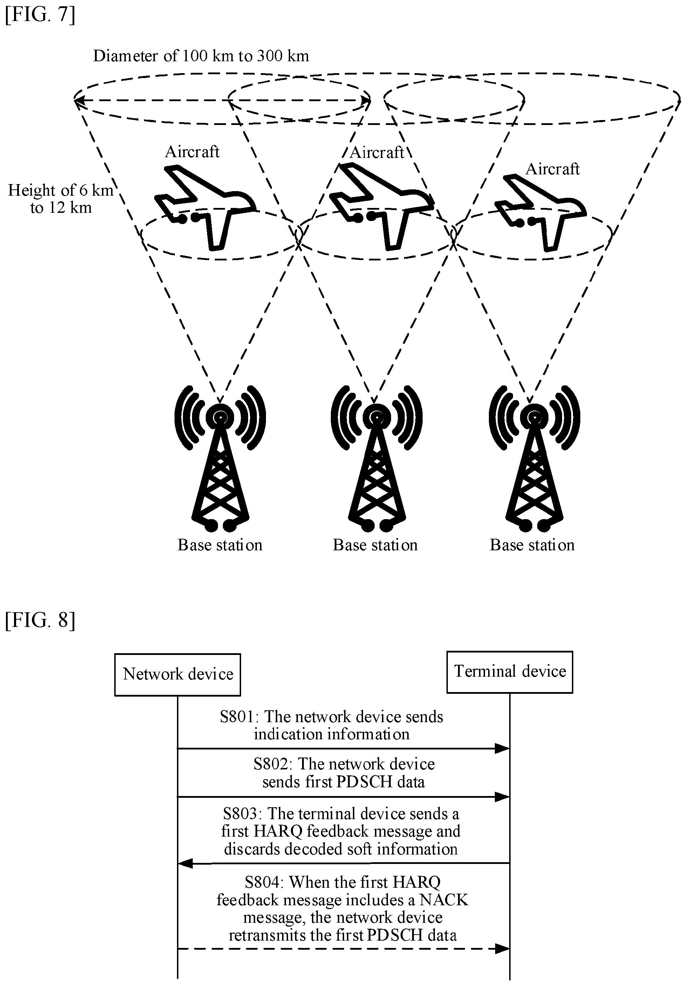

For example, FIG. 7 is a third diagram of an architecture of a communication system to which a communication method according to an embodiment of this application is applicable. As shown in FIG. 7, the communication system is an air-to-ground (air-to-ground, ATG) communication system, and the communication system mainly includes a network device and a terminal device. The network device may include a terrestrial base station, and the terminal device may include a high-altitude aircraft, an on-board handheld terminal, and the like. It may be understood that, a height between the base station and the terminal device of 6 to 12 km and a coverage diameter of the base station of 100 to 300 km shown in FIG. 7 are merely examples, and should not be construed as a limitation on embodiments.

It should be noted that, a network architecture and a service scenario described in embodiments are intended to describe the technical solutions in embodiments more clearly, and do not constitute a limitation on the technical solutions provided in embodiments. A person of ordinary skill in the art may learn that with evolution of a network architecture and emergence of a new service scenario, the technical solutions provided in embodiments are also applicable to resolving similar technical problems.

It may be understood that, FIG. 5 to FIG. 7 are simplified diagrams used as an example for ease of understanding. The communication system may alternatively include another network device and/or another terminal device that are/is not shown in FIG. 5 to FIG. 7.

For ease of understanding, the following specifically describes a communication method provided in embodiments with reference to FIG. 8 to FIG. 10.

Specifically, as shown in FIG. 8, a procedure for the communication method is as follows.

S801: A network device sends indication information. Correspondingly, a terminal device receives the indication information.

The indication information may indicate the terminal device to send a HARQ feedback message and discard decoded soft information.

The HARQ feedback message may be determined based on a decoding result of PDSCH data, the decoded soft information may be determined based on the PDSCH data, and the decoded soft information is for determining the decoding result. In other words, the terminal device may decode/demodulate the received PDSCH data, and calculate the corresponding decoded soft information (LLR). The LLR may be for determining the decoding result corresponding to the PDSCH data. The decoding result may include a decoding success (correct) or a decoding failure (error).

When the terminal device determines, based on the decoded soft information, that the PDSCH data is successfully decoded, the terminal device may send an ACK message to the network device; and when the terminal device determines, based on the decoded soft information, that the PDSCH data fails to be decoded, the terminal device may send a NACK message to the network device. For example, the terminal device may determine, through a CRC check, whether a fault occurs in the received PDSCH data. If the CRC check succeeds, the terminal device may determine that decoding succeeds, and send the ACK message to the network device. If the CRC check fails, the terminal device may determine that decoding fails, and send the NACK message to the network device.

It may be understood that, when the terminal device determines that decoding succeeds, the terminal device may determine corresponding decoded data based on the decoded soft information; and when the terminal device determines that decoding fails, the decoded soft information is soft information that is incorrectly decoded. That the terminal device discards the decoded soft information may be understood as: The terminal device discards soft information that is incorrectly decoded, that is, the terminal device does not perform soft combination and decoding. In this case, the terminal device may separately decode each piece of PDSCH data, and each piece of PDSCH data is independent data. In other words, regardless of whether the terminal device feeds back the ACK message or the NACK message, the terminal device may continue to receive new PDSCH data or retransmitted PDSCH data in a same HARQ process. To be specific, the terminal device may receive each piece of data received in the same HARQ process as a new piece of PDSCH data and separately decode the data, regardless of whether the PDSCH data is newly transmitted data or retransmitted data, or before feeding back a HARQ feedback message of a previously received piece of PDSCH data to the network device, the terminal device may continue to receive PDSCH data (regardless of newly transmitted data or retransmitted data) in the same HARQ process. This is not limited.

In this case, in the same HARQ process, the network device may continue to send a next piece of PDSCH data without waiting for an ACK message of a previous piece of PDSCH data, so that time domain resource utilization can be improved. In addition, incorrect identification or misidentification on a terminal device side that is caused because the terminal device cannot determine whether currently received data is retransmitted data of a previous piece of data or another new piece of data does not occur, so that communication reliability can be improved.

It should be noted that, that the terminal device discards the decoded soft information may be alternatively replaced with: The terminal device abandons the decoded soft information, the terminal device deletes the decoded soft information, the terminal device cleans the decoded soft information, or the like. This is not limited.

It may be understood that, that the terminal device sends the HARQ feedback message and discards the decoded soft information may be understood as disabling HARQ transmission. In other words, in a HARQ thread in which the terminal device disables HARQ transmission, the terminal device sends the HARQ feedback message and discards the decoded soft information. Disabling HARQ transmission may also be replaced with another description. This is not limited. In this embodiment, disabling HARQ transmission may be mutually replaced with that the terminal device sends the HARQ feedback message and discards the decoded soft information. Details are not described subsequently.

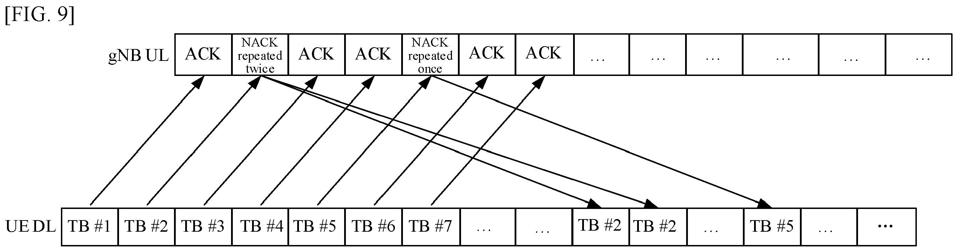

For example, in a retransmission solution in which HARQ transmission is disabled, as shown in FIG. 9, in a same HARQ process, a gNB may send a TB to UE through a downlink (downlink, DL), and the UE may separately decode the received TB, and feed back a HARQ feedback message of each TB through an uplink (uplink, UL). For example, the gNB sends a TB #1 to the UE, and the UE may perform a CRC check on the TB #1, determine that the TB #1 is successfully decoded, and send, to the gNB, an ACK message corresponding to the TB #1. The gNB sends a TB #2 to the UE, and the UE may perform a CRC check on the TB #2, determine that the TB #2 fails to be decoded, and send, to the gNB, a NACK message corresponding to the TB #2. The gNB sends a TB #3 to the UE, and the UE may perform a CRC check on the TB #3, determine that the TB #3 is successfully decoded, and send, to the gNB, an ACK message corresponding to the TB #3. The gNB sends a TB #4 to the UE, and the UE may perform a CRC check on the TB #4, determine that the TB #4 is successfully decoded, and send, to the gNB, an ACK message corresponding to the TB #4. The gNB sends a TB #5 to the UE, and the UE may perform a CRC check on the TB #5, determine that the TB #5 fails to be decoded, and send, to the gNB, a NACK message corresponding to the TB #5. The gNB sends a TB #6 to the UE, and the UE may perform a CRC check on the TB #6, determine that the TB #6 is successfully decoded, and send, to the gNB, an ACK message corresponding to the TB #6, and the NB sends, to the UE, the ACK message corresponding to the TB #6, and so on.

It may be understood that, before the gNB receives the ACK message corresponding to the TB #1, the gNB may continue to send other TBs, for example, the TB #2 and the TB #3, to the UE in the same HARQ process. After the gNB receives the NACK message corresponding to the TB #2, the gNB may further continue to send other TBs, for example, the TB #6 and the TB #7, to the UE in the same HARQ process. Receiving and sending of other TBs are similar. Details are not described again. After the gNB receives the NACK messages corresponding to the TB #2 and the TB #6, the gNB may perform PHY/MAC retransmission, and retransmit the TB #2 and the TB #6 to the UE after specific latency until an ACK message corresponding to the TB #2 and an ACK message corresponding to the TB #6 are received.

The following describes the indication information.

In a possible design solution, the indication information may be carried in DCI, that is, carried in an existing information element, to reduce implementation difficulty, or may be carried in a new information element, for example, newly defined DCI, to improve implementation flexibility. This is not limited.

Optionally, the indication information may include a decoding results feedback (decoding results feedback, DRF) field.

When a value of the decoding results feedback field is a first value, the indication information may indicate the terminal device to send the HARQ feedback message and discard the decoded soft information. In other words, when the value of the decoding results feedback field is the first value, regardless of whether the terminal device feeds back an ACK message or a NACK message, the terminal device may continue to receive new PDSCH data or retransmitted PDSCH data in a same HARQ process. To be specific, the terminal device may receive each piece of data received in the same HARQ process as a new piece of PDSCH data and separately decode the data, regardless of whether the PDSCH data is newly transmitted data or retransmitted data, or before feeding back a HARQ feedback message of a previously received piece of PDSCH data to the network device, the terminal device may continue to receive PDSCH data (regardless of newly transmitted data or retransmitted data) in the same HARQ process. This is not limited.

It may be understood that, when the value of the decoding results feedback field is a second value, the indication information may further indicate the terminal device not to send the HARQ feedback message (or not to feed back the decoding result, which is equivalent to disabling HARQ feedback), or the terminal device and the network device need to perform HARQ retransmission based on the foregoing stop-and-wait protocol.

The value of the decoding results feedback field may be determined based on a value of a bit. The decoding results feedback field may occupy one bit, or occupy a plurality of bits. This is not limited. For ease of understanding, the following uses an example in which the decoding results feedback field occupies one bit for description. For example, when the DRF=1, the terminal device may send the HARQ feedback message and discard the decoded soft information. In this case, in a same HARQ process, the network device may directly send a next piece of PDSCH data without waiting for the terminal device to feed back an ACK message corresponding to a previous PDSCH (that is, feed back a real decoding result). In other words, the terminal device may expect to continue to receive, in the same HARQ process before feeding back an ACK message corresponding to a previous PDSCH to the terminal device, a next piece of PDSCH data (which may be retransmitted data or newly transmitted data) sent by the network device. The terminal device receives all data in the HARQ process as new data, and does not perform soft combination.

It may be understood that, a next piece of PDSCH data may be replaced with another piece of PDSCH data, or may be expressed in another manner. This is not limited.

When the DRF=0, the terminal device may not send the HARQ feedback message (which is equivalent to disabling HARQ feedback), or the terminal device may feed back the HARQ feedback message, and the network device only can continue to send a next piece of PDSCH data (newly transmitted data) in a same HARQ process after waiting for the terminal device to feed back an ACK message corresponding to a previous PDSCH. In other words, the terminal device does not expect to receive, in the same HARQ process before feeding back an ACK message corresponding to a previous PDSCH to the terminal device, a next piece of PDSCH data (newly transmitted data) sent by the network device.

It may be understood that, a field in existing DCI may be directly reused for the DRF, for example, the NDI field, the RV field, and the HARQ process number field in Table 2. This is not limited. Alternatively, the DRF may be carried in a newly defined DCI format, which is named as a first DCI format. When the first DCI format is used for scheduling the PDSCH data, the network device may explicitly indicate, by using a value of the DRF field, to use a HARQ disabled transmission mode. (This DCI format is used for the scheduling of PDSCH in one cell if HARQ is disabled).

It may be understood that, a difference between the first DCI format and an existing DCI format lies in that the first DCI format includes the DRF field, and may not include at least one of the following: the NDI field, the RV field, or the HARQ process number field. Therefore, a length of the first DCI format may be shorter than a length of the existing DCI format, or the first DCI format occupies fewer bits.

It should be noted that, when the first DCI format does not include the RV field, the network device may perform retransmission by using a preset redundancy version. For example, the preset redundancy version may be RV0. This is not limited. It may be understood that, a name of the decoding results feedback field is merely an example, and the decoding results feedback field may be alternatively named as a feedback field, a first field, or any another possible name. This is not limited.

Optionally, the DCI may be alternatively a newly defined DCI format, which is named a second DCI format. The second DCI format may indicate PDSCH scheduling. The second DCI format is different from the existing DCI format. For example, the second DCI format may be a format 1_x, a format 5_x, or the like. This is not limited.

The second DCI format may implicitly indicate the terminal device to disable HARQ transmission. For example, when the terminal device detects the second DCI format through blind detection, the terminal device may send the HARQ feedback message to the network device and discard the decoded soft information based on the second DCI format. In other words, when the second DCI format is used for scheduling the PDSCH data, the network device may implicitly indicate, by using the DCI format, to use a HARQ disabled transmission mode. (This DCI format is used for the scheduling of PDSCH in one cell, in which HARQ is disabled).

It may be understood that, a difference between the second DCI format and the existing DCI format lies in that the second DCI format may not include at least one of the following: the NDI field, the RV field, or the HARQ process number field. Therefore, a length of the second DCI format may be shorter than a length of the existing DCI format, or the second DCI format occupies fewer bits. A difference between the second DCI format and the first DCI format lies in that the second DCI format may not include the DRF field.

It should be noted that, when the second DCI format does not include the RV field, the network device may perform retransmission by using a preset redundancy version. For example, the preset redundancy version may be RV0. This is not limited.

In a possible design solution, the indication information may be carried in an RRC message. The network device may indicate, by using an RRC message, a HARQ process in which HARQ transmission is disabled (for example, by indicating a HARQ process number corresponding to the HARQ process). For example, in a first HARQ process, the indication information may indicate to send the HARQ feedback message and discard the decoded soft information. The first HARQ process may include one or more HARQ processes. This is not limited. In the first HARQ process, the terminal device may send the HARQ feedback message and discard the decoded soft information. In a HARQ process (for example, the following second HARQ process) in which HARQ transmission is not disabled, the terminal device and the network device may perform data transmission in a manner described in "4. HARQ process" in the foregoing technical term part, or the terminal device and the network device may perform data transmission in a manner in which HARQ feedback is disabled. This is not limited.

For example, the network device may alternatively directly indicate, by using an RRC message, a number of a HARQ process in which HARQ transmission is disabled, and a number of a HARQ process in which HARQ transmission is not disabled (for example, the following second HARQ process number). This is not limited. Then, the network device schedules the PDSCH data by using the DCI. An existing implementation method may be reused for a specific implementation of scheduling the PDSCH data by the network device by using the DCI. Details are not described.

It may be understood that, in a HARQ process corresponding to a HARQ process number indicating that HARQ transmission is disabled, the network device may directly send a next piece of PDSCH data in the HARQ process without waiting for the terminal device to feed back an ACK message corresponding to a previous PDSCH. In other words, the terminal device may expect to continue to receive, in the HARQ process before feeding back the ACK message corresponding to the previous PDSCH to the terminal device, the next piece of PDSCH data (which may be new data or retransmitted data) sent by the network device. The terminal device receives, as new data, all data received in the HARQ thread, and does not perform soft combination. In a HARQ process in which HARQ transmission is not disabled, the network device does not expect to receive, before HARQ-ACK feedback transmission, PDSCH data transmitted in the HARQ process. In other words, the network device only can continue to send a next piece of PDSCH data (newly transmitted data) in the HARQ process after receiving an ACK message of a previous piece of PDSCH data. In other words, the terminal device does not expect to continue to receive, in the HARQ process before feeding back the ACK message corresponding to the previous PDSCH to the terminal device, the next piece of PDSCH data (newly transmitted data) sent by the network device. Alternatively, in the HARQ process in which HARQ transmission is not disabled, the terminal device and the network device may perform data transmission in a manner in which HARQ feedback is disabled.

It may be understood that, when the indication information is carried in the RRC message, the DCI used by the network device to schedule the PDSCH data in the corresponding process in which HARQ transmission is disabled may not include the NDI field and/or the RV field, but the HARQ process number field needs to be reserved, so that DCI overheads can be reduced. It should be noted that, when the DCI does not include the RV field, the network device may perform retransmission by using a preset redundancy version. For example, the preset redundancy version may be RV0. This is not limited. A name of the indication information is merely an example, and the indication information may also be referred to as first information, configuration information, or the like. This is not limited.

S802: The network device sends first PDSCH data. Correspondingly, the terminal device receives the first PDSCH data.

The PDSCH data includes the first PDSCH data.

After the network device sends the DCI to the terminal device and schedules a PDSCH, the network device may send the first PDSCH data to the terminal device on the PDSCH, and the terminal device may receive the first PDSCH data based on a field carried in the DCI. For example, the terminal device may receive the first PDSCH data on a corresponding time-frequency resource based on a frequency domain resource assignment field and a time domain resource assignment field in the DCI.

It may be understood that, the DCI may be the existing DCI (format), the first DCI format, the second DCI format, or the like. Selection of the DCI is related to a bearer manner of the indication information in step S801. Details are not described.

S803: The terminal device sends a first HARQ feedback message and discards decoded soft information. Correspondingly, the network device receives the first HARQ feedback message.

For example, the terminal device may send the first HARQ feedback message to the network device and discard the decoded soft information based on the indication information.

The first HARQ feedback message may be determined based on a decoding result of the first PDSCH data, the decoded soft information may be determined based on the first PDSCH data, and the decoded soft information is for determining the decoding result.

The terminal device may determine, through a CRC check, whether a fault occurs in the first PDSCH data. If the CRC check succeeds, the terminal device may determine that the first PDSCH data is successfully decoded, and send a corresponding ACK message to the network device. If the CRC check fails, the terminal device may determine that the first PDSCH data fails to be decoded, and send a corresponding NACK message to the network device.

For specific descriptions in which the terminal device discards the decoded soft information, refer to the descriptions of step S801. Details are not described again.

The following uses the first PDSCH data as an example to describe the indication information in detail.

In a possible design solution, the indication information may be carried in DCI.

Optionally, the indication information may include a DRF field (DRF=1), and the indication information may indicate the terminal device to send the first HARQ feedback message and discard the decoded soft information. In other words, before the network device receives the first HARQ feedback message, in a HARQ process the same as that of the first PDSCH data, the network device may send second PDSCH data, and the terminal device may receive the second PDSCH data. In other words, in the same HARQ process, the network device may directly send the second PDSCH data without waiting for the terminal device to feed back the ACK message corresponding to the first PDSCH. The terminal device receives data in the HARQ thread as new data, and does not perform soft combination. For example, before receiving the first HARQ feedback message (which may be an ACK message or a NACK message), the network device may continue to send the second PDSCH data to the terminal device in the same HARQ process. For another example, when the first HARQ feedback message received by the network device is the NACK message, the network device may also continue to send the second PDSCH data to the terminal device in the same HARQ process. This is not limited.

It may be understood that, the first PDSCH data and the second PDSCH data may be same data or different data. This is not limited.

In a possible design solution, the indication information may be carried in an RRC message.

Optionally, in a first HARQ process, the indication information may indicate to send the first HARQ feedback message and discard the decoded soft information.

Optionally, before receiving the first HARQ feedback message, the method further includes:

The network device sends third PDSCH data in the first HARQ process. In other words, in the first HARQ process, the network device may directly send the third PDSCH data without waiting for the terminal device to feed back the ACK message corresponding to the first PDSCH. The terminal device receives data in the first HARQ thread as new data, and does not perform soft combination. For example, before receiving the first HARQ feedback message (which may be an ACK message or a NACK message) in the first HARQ process, the network device may continue to send the third PDSCH data (newly transmitted data) to the terminal device in the first HARQ process. For another example, when the first HARQ feedback message received by the network device in the first HARQ process is the NACK message, the network device may continue to send the third PDSCH data (retransmitted data) to the terminal device in the first HARQ process. For still another example, when the first HARQ feedback message received by the network device in the first HARQ process is the ACK message, the network device may continue to send the third PDSCH data (newly transmitted data) to the terminal device in the first HARQ process.

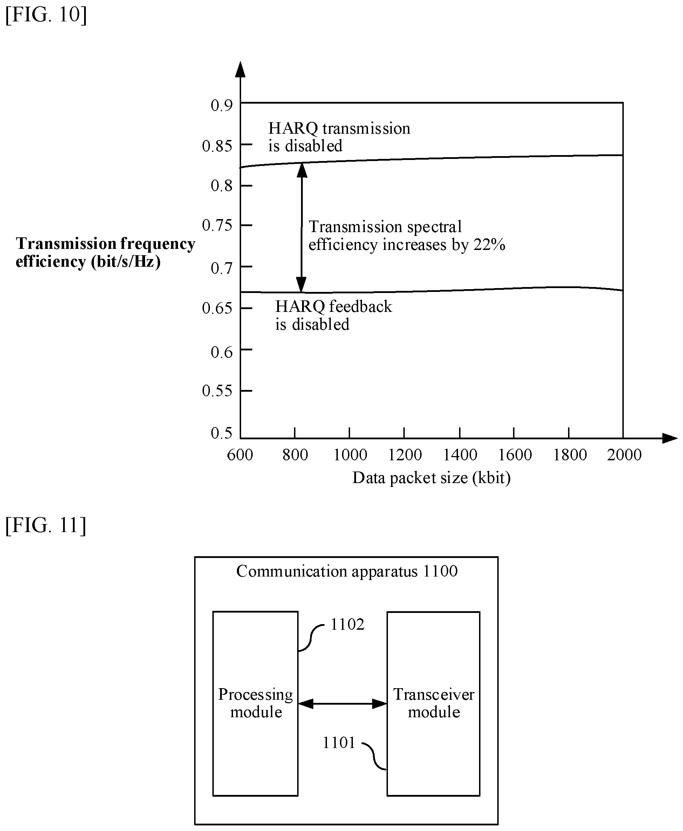

It may be understood that, the first PDSCH data and the third PDSCH data may be same data or different data. This is not limited. In this embodiment, transmission spectral efficiency of a retransmission solution based on HARQ disabled transmission and transmission spectral efficiency a retransmission solution based on disabling HARQ feedback in an NR-NTN are simulated. As shown in FIG. 10, a horizontal axis is a data packet size (packet size), in units of kilobits (Kbit), and a vertical axis is transmission spectral efficiency/spectral efficiency (spectrum efficiency), in units of bit/s/Hz. Assuming that a physical layer target block error rate is set to 0.1 after HARQ transmission is disabled, and a physical layer target block error rate is set to 0.01 after HARQ feedback is disabled, the transmission spectral efficiency when HARQ transmission is disabled is higher, by 22%, than the transmission spectral efficiency when HARQ feedback is disabled. Therefore, after HARQ transmission is disabled, the network device and the terminal device may implement retransmission at a PHY/MAC layer, so that retransmission latency can be reduced and transmission spectral efficiency can be improved.

Optionally, in S804, when the first HARQ feedback message includes the NACK message, the network device retransmits the first PDSCH data.

When the terminal device incorrectly decodes/fails to decode the first PDSCH data, the terminal device sends, to the network device, a NACK message corresponding to the first PDSCH data. After receiving the NACK message, the network device may continue to retransmit the first PDSCH data to the terminal device until receiving an ACK message that is corresponding to the first PDSCH data and that is fed back by the terminal device.

In conclusion, the terminal device may feed back, to the network device, a HARQ feedback message corresponding to received PDSCH data, for example, the first HARQ feedback message corresponding to the first PDSCH data, and discard the decoded soft information. In this case, the network device may obtain a HARQ feedback message of each piece of PDSCH data, to avoid spectral efficiency reduction cause by disabling HARQ feedback. In addition, all pieces of PDSCH data received by the terminal device are independent, in other words, the terminal device may separately decode each piece of PDSCH data, or the terminal device does not perform soft combination and decoding, and retransmission at the PHY/MAC layer may be implemented, so that retransmission latency can be reduced, and transmission spectral efficiency can be improved.

With reference to the foregoing embodiment, optionally, when the decoding result of the first PDSCH data is incorrect, the method may further include:

The terminal device obtains a channel estimation result.

The terminal device determines a quantity of retransmissions based on the decoding result and the channel estimation result.

The terminal device sends the quantity of retransmissions. Correspondingly, the network device receives the quantity of retransmissions.

The network device retransmits the first PDSCH data based on the quantity of retransmissions.

The quantity of retransmissions represents a quantity of attempts that the network device retransmits the first PDSCH data.

It may be understood that, when HARQ transmission is disabled, the terminal device may feed back the HARQ feedback message to the network device. When the terminal device performs decoding incorrectly, the terminal device may first obtain a current channel estimation result. The channel estimation result may represent whether the terminal device can correctly demodulate the PDSCH data. In other words, the terminal device may correct and restore the received data based on the channel estimation result. The terminal device may determine the quantity of retransmissions based on the decoding result and the current channel estimation result, to indicate the quantity of attempts that the network device retransmits the PDSCH data. The network device can perform retransmission more accurately based on the channel estimation result, to improve retransmission reliability.

It may be understood that, an existing implementation method may be reused for a specific implementation process in which the terminal device determines the quantity of retransmissions based on the decoding result and the channel estimation result. Details are not described.

For example, the first PDSCH data is used as an example. The terminal device performs a CRC check on the first PDSCH data. When the CRC check fails, the terminal device may determine, based on the decoding result of the first PDSCH data and the current channel estimation result, the quantity of attempts that the network device retransmits the first PDSCH data. The network device can perform retransmission more accurately.

It may be understood that, the terminal device may indicate the quantity of retransmissions by using a value of bits. For example, the terminal device may use two bits to indicate the quantity of retransmissions. When a value of the two bits is 00, it indicates that the first PDSCH data is correctly decoded. When the value of the two bits is 01, it indicates that the first PDSCH data is incorrectly decoded, and it is recommended that the first PDSCH data is retransmitted once. When the value of the two bits is 10, it indicates that the first PDSCH data is incorrectly decoded, and it is recommended that the first PDSCH data is retransmitted twice. When the value of the two bits is 11, it indicates that the first PDSCH data is incorrectly decoded, and it is recommended that the first PDSCH data is retransmitted three times.

It may be understood that, the terminal device may alternatively indicate the quantity of retransmissions in another manner. This is not limited. The bits may be carried in the NACK message, or any other possible message or field. This is not limited.

For example, as shown in FIG. 9, the bits may be carried in a NACK message. The UE sends, to the gNB, the NACK message corresponding to the TB #2. The gNB may determine, based on a value of bits of 10 carried in the NACK message, that a quantity of attempts of retransmitting the TB #2 is 2, and the network device may repeatedly send the TB #2 to the terminal device twice. The UE sends, to the gNB, the NACK message corresponding to the TB #5. The gNB may determine, based on a value of bits of 01 carried in the NACK message, that a quantity of attempts of retransmitting the TB #5 is 1, and the network device may repeatedly send the TB #5 to the terminal device once.

It may be understood that, when a bit length of the DCI is not changed, the network device may directly reuse a field (for example, the RV field or the NDI field) in the existing DCI to indicate the terminal device whether to report the HARQ feedback message (that is, whether to feed back a real decoding result), and the terminal device directly discards the decoded soft information regardless of whether the terminal device reports the HARQ feedback message, so that blind detection complexity can be reduced, and signaling overheads are not increased.

Based on the foregoing solution in which HARQ feedback is disabled, the network device may reuse the field (for example, the RV field or the NDI field) in the existing DCI to indicate the terminal device whether to send the HARQ feedback message. For example, the network device may indicate, by using the RRC message, a HARQ process (for example, a HARQ process #a) in which HARQ soft combination is not used. In the HARQ process #a, the network device directly discards the decoded soft information regardless of whether decoding is correct. In addition, the network device may reuse the RV field in the DCI to indicate to report the HARQ feedback message in the HARQ process #a.

If the network device only needs to invoke, to transmit data, a HARQ process that indicates that HARQ transmission is disabled (for example, all used data processes are processes in which HARQ transmission is disabled, or all HARQ processes are configured as processes in which HARQ transmission is disabled), the network device may use newly defined short DCI to schedule PDSCH data, for example, the first DCI format or the second DCI format. In this case, the terminal device may only perform blind detection on the newly defined short DCI, and does not need to perform blind detection on DCI of different lengths, so that blind detection complexity can be reduced.

If the HARQ process invoked by the network device includes a HARQ process in which HARQ transmission is disabled, a process in which HARQ feedback is disabled, a process in which HARQ is enabled (for example, the terminal device and the network device need to perform HARQ retransmission based on the foregoing stop-and-wait protocol), or the like, the network device may directly reuse the existing DCI (for example, reuse an existing field for the decoding results feedback field, for example, the RV field or the NDI field) to schedule the PDSCH data. In this case, the terminal device may perform blind detection on DCI of a same length, and does not need to perform blind detection on DCI of different lengths, so that blind detection complexity can be reduced.

Alternatively, the network device may schedule, by using the newly defined short DCI, the PDSCH data in the HARQ process that indicates that HARQ transmission is disabled, and schedule, by using the existing DCI, the PDSCH data in the HARQ process that does not indicate that HARQ transmission is disabled. In this case, complexity of blind detection by the terminal device is high, but DCI overheads can be reduced.

It may be understood that, in this embodiment, the "process" and the "thread" may be replaced with each other. For example, a HARQ process and a HARQ thread have a same meaning. This is not limited.

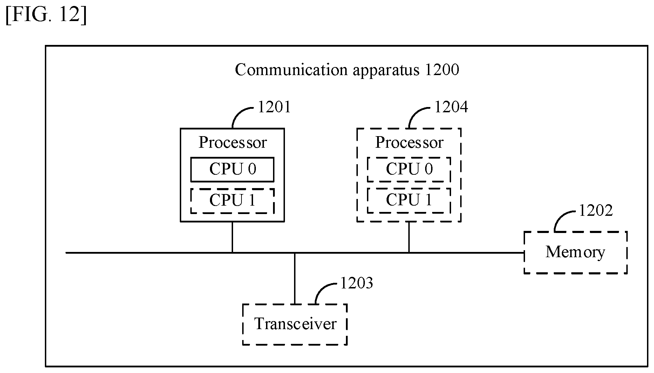

The foregoing describes in detail, with reference to FIG. 8, the communication method provided in this embodiment. With reference to FIG. 11 and FIG. 12, the following describes in detail a communication apparatus configured to perform the communication methods provided in embodiments.

FIG. 11 is a first diagram of a structure of a communication apparatus according to an embodiment of this application. For example, as shown in FIG. 11, a communication apparatus 1100 includes a transceiver module 1101 and a processing module 1102. For ease of description, FIG. 11 shows only main parts of the communication apparatus.

The transceiver module 1101 is configured to perform receiving and sending functions in the method shown in FIG. 8, and the processing module 1102 is configured to perform a function in the method shown in FIG. 8 other than the receiving and sending functions.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11), and the storage module stores a program or instructions. When the processing module 1102 executes the program or the instructions, the communication apparatus 1100 is caused to perform a function of the terminal and/or the network device in the method shown in FIG. 8 in the foregoing methods.

It may be understood that, the communication apparatus 1100 may be a terminal or a network device, may be a chip (system) or another part or component that may be disposed in the terminal or the network device, or may be an apparatus that includes the terminal or the network device. This is not limited in embodiments.

In addition, for technical effects of the communication apparatus 1100, refer to the technical effects of the communication method. Details are not described herein again.

FIG. 12 is a second diagram of a structure of a communication apparatus according to an embodiment of this application. For example, the communication apparatus may be a terminal, or may be a chip (system) or another part or component that may be disposed in the terminal. As shown in FIG. 12, the communication apparatus 1200 may include a processor 1201. Optionally, the communication apparatus 1200 may further include a memory 1202 and/or a transceiver 1203. The processor 1201 is coupled to the memory 1202 and the transceiver 1203, for example, may be connected to the memory 1202 and the transceiver 1203 through a communication bus.

The following specifically describes the components of the communication apparatus 1200 with reference to FIG. 12.

The processor 1201 is a control center of the communication apparatus 1200, and may be a processor or a generic term of a plurality of processing elements. For example, the processor 1201 is one or more central processing units (central processing units, CPUs), or may be an application-specific integrated circuit (application-specific integrated circuit, ASIC), or one or more integrated circuits configured to implement embodiments, for example, one or more microprocessors (digital signal processors, DSPs) or one or more field programmable gate arrays (field programmable gate arrays, FPGAs).

Optionally, the processor 1201 may perform various functions of the communication apparatus 1200 by running or executing a software program stored in the memory 1202 and invoking data stored in the memory 1202, for example, perform the foregoing communication method shown in FIG. 8.

In a specific implementation, in an embodiment, the processor 1201 may include one or more CPUs, for example, a CPU 0 and a CPU 1 shown in FIG. 12.

During specific implementation, in an embodiment, the communication apparatus 1200 may also include a plurality of processors, for example, the processor 1201 and a processor 1204 shown in FIG. 12. Each of the processors may be a single-core processor (single-CPU), or may be a multi-core processor (multi-CPU). The processor herein may be one or more devices, circuits, and/or processing cores configured to process data (for example, computer program instructions).

The memory 1202 is configured to store the software program for performing the solutions in embodiments, and the processor 1201 controls execution. For a specific implementation, refer to the foregoing method embodiments. Details are not described herein again.

Optionally, the memory 1202 may be a read-only memory (read-only memory, ROM) or another type of static storage device that can store static information and/or instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store desired program code in a form of instructions or a data structure and can be accessed by a computer. However, the memory is not limited thereto. The memory 1202 may be integrated with the processor 1201, or may exist independently, and is coupled to the processor 1201 through an interface circuit (not shown in FIG. 12) of the communication apparatus 1200. This is not specifically limited in embodiments.

The transceiver 1203 is configured to communicate with another communication apparatus. For example, the communication apparatus 1200 is a terminal, and the transceiver 1203 may be configured to communicate with a network device or communicate with another terminal device. For another example, the communication apparatus 1200 is a network device, and the transceiver 1203 may be configured to communicate with a terminal or communicate with another network device.

Optionally, the transceiver 1203 may include a receiver and a transmitter (not separately shown in FIG. 12). The receiver is configured to implement a receiving function, and the transmitter is configured to implement a sending function.

Optionally, the transceiver 1203 may be integrated with the processor 1201, or may exist independently, and is coupled to the processor 1201 through an interface circuit (not shown in FIG. 12) of the communication apparatus 1200. This is not specifically limited in embodiments.

It can be understood that, the structure of the communication apparatus 1200 shown in FIG. 12 does not constitute any limitation on the communication apparatus. An actual communication apparatus may include more or fewer components than those shown in the figure, a combination of some components, or a different arrangement of the components.

In addition, for technical effects of the communication apparatus 1200, refer to the technical effects of the methods in the foregoing method embodiments. Details are not described herein again.

It should be understood that, the processor in embodiments may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, discrete hardware component, or the like. The general-purpose processor may be a microprocessor, or the processor may be any conventional processor or the like.

It also should be understood that, the memory in embodiments may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented using software, hardware (for example, circuit), firmware, or any combination thereof. When software is used to implement embodiments, all or a part of the foregoing embodiments may be implemented in a form of a computer program product. The computer program product includes one or more computer instructions or computer programs. When the computer instructions or the computer programs are loaded and executed on a computer, the procedures or functions according to embodiments are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In embodiments, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It may be understood that, sequence numbers of the foregoing processes do not mean execution sequences in various embodiments. The execution sequences of the processes should be determined based on functions and internal logic of the processes, and should not be construed as any limitation on the implementation processes of embodiments.

A person of ordinary skill in the art may be easily aware that, units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it may be understood that, the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions in embodiments.

In addition, functional units in embodiments may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in embodiments essentially, or the part contributing to the conventional technology, or a part of the technical solutions may be implemented in a form of software product. The computer software product is stored in a storage medium, and includes several instructions for instructing a computer device (which may be a personal computer, a server, or a network device) to perform all or a part of the steps of the methods described in embodiments. The foregoing storage medium includes any medium that may store program code, like a USB flash drive, a removable hard disk drive, a read-only memory (read-only memory, ROM), a random access memory (random access memory, RAM), a magnetic disk, or an optical disc.

The foregoing descriptions are merely specific implementations of embodiments, but are not intended to limit the protection scope of embodiments. Any variation or replacement readily figured out by a person skilled in the art within the technical scope disclosed in embodiments shall fall within the protection scope of embodiments. Therefore, the protection scope of embodiments shall be subject to the protection scope of the claims.

## Claims

1. A communication method, comprising:
receiving first physical downlink shared channel PDSCH data; and
sending a first HARQ feedback message and discarding decoded soft information, wherein the first HARQ feedback message is determined based on a decoding result of the first PDSCH data, the decoded soft information is determined based on the first PDSCH data, and the decoded soft information is for determining the decoding result.

2. The method according to claim 1, wherein the method further comprises:
receiving indication information; and
the sending the first HARQ feedback message and discarding the decoded soft information comprises:
sending the first HARQ feedback message and discarding the decoded soft information based on the indication information.

3. The method according to claim 1 or 2, wherein the indication information is carried in downlink control information DCI.

4. The method according to claim 3, wherein the indication information comprises a decoding results feedback field, and when a value of the decoding results feedback field is a first value, the first HARQ feedback message is sent, and the decoded soft information is discarded.

5. The method according to claim 4, wherein at least one of the following is reused for the decoding results feedback field: a new data indicator NDI field, a redundancy version RV field, or a HARQ process number field.

6. The method according to claim 1 or 2, wherein the indication information is carried in a radio resource control RRC message.

7. The method according to claim 6, wherein in a first HARQ process, the indication information indicates to send the first HARQ feedback message and discard the decoded soft information.

8. The method according to any one of claims 1 to 7, wherein when the decoding result of the first PDSCH data is incorrect, the method further comprises:
obtaining a channel estimation result;
determining a quantity of retransmissions based on the decoding result and the channel estimation result, wherein the quantity of retransmissions represents a quantity of attempts that a network device retransmits the first PDSCH data; and sending the quantity of retransmissions.

9. A communication method, comprising:
sending indication information, wherein the indication information indicates a terminal device to send a HARQ feedback message and discard decoded soft information, the HARQ feedback message is determined based on a decoding result of PDSCH data, the decoded soft information is determined based on the PDSCH data, and the decoded soft information is for determining the decoding result;
sending first PDSCH data, wherein the PDSCH data comprises the first PDSCH data; and
receiving a first HARQ feedback message.

10. The method according to claim 9, wherein before the receiving the first HARQ feedback message, the method further comprises:
sending second PDSCH data in a same HARQ process as that of the first PDSCH data.

11. The method according to claim 9 or 10, wherein the indication information is carried in downlink control information DCI.

12. The method according to claim 11, wherein the indication information comprises a decoding results feedback field, and when a value of the decoding results feedback field is a first value, the indication information indicates the terminal device to send the HARQ feedback message and discard the decoded soft information.

13. The method according to claim 12, wherein at least one of the following is reused for the decoding results feedback field: a new data indicator NDI field, a redundancy version RV field, or a HARQ process number.

14. The method according to claim 9, wherein the indication information is carried in a radio resource control RRC message.

15. The method according to claim 14, wherein in a first HARQ process, the indication information indicates to send the HARQ feedback message and discard the decoded soft information.

16. The method according to claim 15, wherein before the receiving the first HARQ feedback message, the method further comprises:
sending third PDSCH data in the first HARQ process.

17. The method according to any one of claims 9 to 16, wherein the method further comprises:
receiving a quantity of retransmissions; and
retransmitting the first PDSCH data based on the quantity of retransmissions.

18. A communication apparatus, wherein the apparatus comprises a module configured to perform the method according to any one of claims 1 to 17.

19. A communication apparatus, wherein the communication apparatus comprises a processor, and when the processor executes computer instructions, the communication apparatus is caused to perform the method according to any one of claims 1 to 17.

20. A communication system, wherein the communication system comprises an apparatus configured to perform the method according to any one of claims 1 to 8, and/or an apparatus configured to perform the method according to any one of claims 9 to 17.

21. A communication chip, wherein the communication chip stores instructions, and when the chip runs on a communication device, the method according to any one of claims 1 to 17 is implemented.

22. A computer-readable storage medium, wherein the computer-readable storage medium comprises a computer program or instructions, and when the computer program or the instructions are run on a computer, the computer is caused to perform the method according to any one of claims 1 to 17.

23. A computer program product, wherein the computer program product comprises a computer program or instructions, and when the computer program or the instructions are run on a communication apparatus, the method according to any one of claims 1 to 17 is performed.

## Amended claims

### Amended claims under Art. 19.1 PCT

1. [Amended] A communication method, applied to a network device, wherein the method comprises: determining a format of downlink control information DCI based on a type of at least one hybrid automatic repeat request HARQ process, wherein the at least one HARQ process is a HARQ process to be invoked by the network device for data transmission, and the type of the HARQ process comprises at least one of the following: HARQ transmission disabled, HARQ feedback disabled, or HARQ transmission enabled; and
sending the DCI, wherein the DCI is for scheduling and transmission of physical downlink shared channel PDSCH data.

2. [Amended] The method according to claim 1, wherein when each type of the at least one HARQ process is the HARQ transmission disabled, the format of the DCI is a short DCI format; and
when the type of the at least one HARQ process comprises at least two of the following: the HARQ transmission disabled, the HARQ feedback disabled, or the HARQ transmission enabled, the format of the DCI is an existing DCI format.

3. [Amended] The method according to claim 2, wherein a quantity of bits comprised in DCI in the short DCI format is less than a quantity of bits comprised in DCI in the existing DCI format.

4. [Amended] The method according to claim 2 or 3, wherein the DCI in the existing DCI format comprises a decoding results feedback field, and the decoding results feedback field indicates a terminal device to disable HARQ transmission in a corresponding HARQ process.

5. [Amended] The method according to any one of claims 2 to 4, wherein the DCI in the short DCI format does not comprise at least one of the following: a new data indicator NDI field, a redundancy version RV field, a HARQ process number field, or a decoding results feedback DRF field.

6. [Amended] The method according to any one of claims 1 to 5, wherein before the sending the DCI, the method further comprises:
sending indication information, wherein the indication information indicates the type of the at least one HARQ process.

7. [Amended] The method according to claim 6, wherein the indication information is carried in a radio resource control RRC message.

8. [Amended] The method according to any one of claims 1 to 7, wherein when a type of a first HARQ process is the HARQ transmission disabled, the first HARQ process represents the terminal device to send a HARQ feedback message and discard decoded soft information, wherein the HARQ feedback message is determined based on a decoding result of the PDSCH data, the decoded soft information is determined based on the PDSCH data, and the decoded soft information is for determining the decoding result.

9. [Amended] The method according to claim 8, wherein after the sending the DCI, the method further comprises:
sending first PDSCH data in a second HARQ process, wherein a type of the second HARQ process is the HARQ transmission disabled; and
sending second PDSCH data in the second HARQ process before receiving a HARQ feedback message corresponding to the first PDSCH data.

10. [Amended] The method according to claim 9, wherein after the sending the second PDSCH data in the second HARQ process, the method further comprises:
receiving a quantity of retransmissions, wherein the quantity of retransmissions is determined by the terminal device based on a channel estimation result and a decoding result of the first PDSCH data when the decoding result is incorrect, and the quantity of retransmissions represents a quantity of attempts that the network device retransmits the first PDSCH data; and
retransmitting the first PDSCH data based on the quantity of retransmissions.

11. [Amended] A communication method, applied to a terminal device, wherein the method comprises: receiving downlink control information DCI, wherein a format of the DCI is determined by a network device based on a type of at least one hybrid automatic repeat request HARQ process, the at least one HARQ process is a HARQ process to be invoked by the network device for data transmission, and the type of the HARQ process comprises at least one of the following: HARQ transmission disabled, HARQ feedback disabled, or HARQ transmission enabled; and
receiving physical downlink shared channel PDSCH data based on the DCI.

12. [Amended] The method according to claim 11, wherein when each type of the at least one HARQ process is the HARQ transmission disabled, the format of the DCI is a short DCI format; and when the type of the at least one HARQ process comprises at least two of the following: the HARQ transmission disabled, the HARQ feedback disabled, or the HARQ transmission enabled, the format of the DCI is an existing DCI format.

13. [Amended] The method according to claim 12, wherein a quantity of bits comprised in DCI in the short DCI format is less than a quantity of bits comprised in DCI in the existing DCI format.

14. [Amended] The method according to claim 12 or 13, wherein the DCI in the existing DCI format comprises a decoding results feedback field, and the decoding results feedback field indicates the terminal device to disable HARQ transmission in a corresponding HARQ process; and
the receiving the physical downlink shared channel PDSCH data based on the DCI comprises:
disabling HARQ transmission in the corresponding HARQ process and receiving the PDSCH data based on the DCI.

15. [Amended] The method according to any one of claims 11 to 14, wherein the DCI in the short DCI format does not comprise at least one of the following: a new data indicator INDI field, a redundancy version RV field, a HARQ process number field, or a decoding results feedback DRF field.

16. [Amended] The method according to any one of claims 12 to 14, wherein the receiving the DCI comprises:
determining the format of the DCI based on the type of the at least one HARQ process; and
receiving the DCI based on the format of the DCI.

17. [Amended] The method according to claim 16, wherein the determining the format of the DCI based on the type of the at least one HARQ process comprises: determining the format of the DCI as the short DCI format based on each type of the at least one HARQ process being the HARQ transmission disabled; and determining the format of the DCI as the existing DCI format based on the type of the at least one HARQ process comprising at least two of the following: the HARQ transmission disabled, the HARQ feedback disabled, or the HARQ transmission enabled.

18. [Added] The method according to any one of claims 12 to 17, wherein before the receiving the DCI, the method further comprises: receiving indication information, wherein the indication information indicates the type of the at least one HARQ process.

19. [Added] The method according to claim 18, wherein the indication information is carried in a radio resource control RRC message.

20. [Added] The method according to any one of claims 11 to 19, wherein when a type of a first HARQ process is the HARQ transmission disabled, the receiving the PDSCH data based on the DCI comprises: receiving first PDSCH data based on the DCI; and sending a first HARQ feedback message and discarding decoded soft information, wherein the first HARQ feedback message is determined based on a decoding result of the first PDSCH data, the decoded soft information is determined based on the first PDSCH data, and the decoded soft information is for determining the decoding result.

21. [Added] The method according to claim 20, wherein when the decoding result of the first PDSCH data is incorrect, the method further comprises: obtaining a channel estimation result; determining a quantity of retransmissions based on the decoding result and the channel estimation result, wherein the quantity of retransmissions represents a quantity of attempts that the network device retransmits the first PDSCH data; and sending the quantity of retransmissions.

22. [Amended] A communication apparatus, wherein the apparatus comprises a module configured to perform the method according to any one of claims 1 to 21.

23. [Amended] A communication apparatus, wherein the communication apparatus comprises a processor, and when the processor executes computer instructions, the communication apparatus is caused to perform the method according to any one of claims 1 to 21.

24. [Amended] A communication system, wherein the communication system comprises an apparatus configured to perform the method according to any one of claims 1 to 10, and/or an apparatus configured to perform the method according to any one of claims 11 to 21.

25. [Amended] A communication chip, wherein the communication chip stores instructions, and when the chip runs on a communication device, the method according to any one of claims 1 to 21 is implemented.

26. [Amended] A computer-readable storage medium, wherein the computer-readable storage medium comprises a computer program or instructions, and when the computer program or the instructions are run on a computer, the computer is caused to perform the method according to any one of claims 1 to 21.

27. [Amended] A computer program product, wherein the computer program product comprises a computer program or instructions, and when the computer program or the instructions are run on a communication apparatus, the method according to any one of claims 1 to 21 is performed.
